# EUROPEAN PATENT APPLICATION

(11) **EP 4 546 596 A1**
(43) Date of publication of application: **30.04.2025**
(21) Application number: 23205930.3
(22) Date of filing: 25.10.2023
(51) Int. Cl.: H02J 7/00, B60L 58/22, H01M 10/42

(54) **METHOD AND SYSTEM FOR BALANCING ELECTRICAL ENERGY STORAGE CELLS**

(71) Applicant: VITO NV, 2400 Mol (BE)
(72) Inventor: Coenen, Peter, B-2400 Mol (BE); Weyen, Dominique, B-2400 Mol (BE)
(74) Representative: Beck, Michaël Andries T.

(57) **Abstract**

The invention concerns a system for balancing charge over rechargeable energy storage devices coupled in series, comprising: balancing units assigned to the rechargeable energy storage devices; an AC signal generator providing an AC signal to the balancing units for balancing the charge on their assigned rechargeable energy storage devices; and a capacitive coupling between the AC signal generator and the balancing units for common mode blocking; wherein the balancing units comprise switching circuits for transferring charge from the AC signal generator to said energy storage devices, and wherein each switching circuit comprises: a first transistor, a first a diode, and a second diode, arranged to transfer, when said first transistor is in a conducting state, charge from the AC signal generator to a respective energy storage device; and a second transistor and a first resistor arranged to discharge, when said second transistor is in a conducting state, charge from said respective energy storage device over said first resistor. A corresponding method is also disclosed.

## Description

### Field of the Invention

The present invention is related to energy storage in series-coupled rechargeable electrical energy storage devices, also called cells, and in particular to balancing systems for increasing or decreasing the voltage of a limited number of such electrical cells. The balancing systems provide means for balancing charge (voltage) differences between cells in a rechargeable energy storage system. The invention is particularly related to a balancing system and to a method of balancing for a series connection of electrochemical cells, such as, but not limited to, ultracapacitors or lithium cells.

### Background

European patent application publication no. EP 2 302 757 A1, in the name of the present applicant, discloses a system for charge balancing over a plurality of rechargeable energy storage devices coupled in series, said system comprising a plurality of balancing units each assigned to one of the rechargeable energy storage devices, an AC signal generator for providing an AC signal to the plurality of balancing units, and capacitive coupling between the AC signal generator and each of the plurality of balancing units for common mode blocking.

It is a disadvantage of the known system that it requires a specifically adapted microcontroller to perform the desired balancing scheme. The desired balancing schemes cannot be implemented in the known system with a standard battery management system (BMS) chip without the use of additional components such as drivers for operating the switches present in the circuit.

Hence, there is a need for an improved system for charge balancing over a plurality of rechargeable energy storage devices coupled in series, which can operate on the basis of a standard battery management system (BMS) chip.

International patent application publication no. WO 2017/109006 A1, in the name of the present applicant, discloses a connectivity check for a rechargeable energy storage system comprising a string of rechargeable energy storage cell modules in series. Each cell module comprises an individual rechargeable energy storage cell or plurality of rechargeable energy storage cells, a switch for use in a connection check, a monitoring and control circuit adapted for measuring a cell module voltage, a single common connection between a terminal of a rechargeable energy storage cell and the monitoring and control circuit within each module. To perform the connectivity check the switch is opened in one module, a cell voltage is measured in the module to give a first measured value, the switch is closed. The cell voltage is measured again to provide a second measured value, and a determination is made if there is a difference between the first and second measured values which would indicate a bad connection.

European patent application publication no. EP 3 061 197 B1, in the name of the present applicant, discloses a method and system for providing pulsed power and data from a main control unit to slave units via a first bus. The main control unit comprises an AC signal generator for providing a plurality of first pulses on the bus for providing the power to the slave units. Each slave unit is AC-coupled to the bus via a first series capacitor arranged for converting the first pulses into second pulses. Data communication from the main control unit to the slave units is established by modulating the first pulses, and by demodulating the second pulses. The modulation may be based on Pulse Position Modulation, Pulse Width Modulation, Pulse Count Modulation, Pulse Amplitude modulation. Zero, one or more bits may be communicated per first pulse. Optionally the slave units may communicate to the main control unit via a second bus.

United States patent application publication no. US 2018/152028 A1 discloses a battery active-balancing system comprising an external balancing power; a buck converter having a first side-winding and second side-winding induced thereby, the first and second side-windings each having positive and negative terminals; a battery comprising series-connected cell-units each having positive and negative terminals; a cell voltage-sensing unit coupled to the battery to sense voltage of the cell-units; a main switch component coupled to first side-winding, battery, and external balancing power, to first side-winding and external balancing power in ON state, and to first side-winding and battery in OFF state; a cell-switch unit comprising first and second cell-switch components, with first cell-switch components coupled to positive terminals of the cell-units and second side-winding, respectively, and second cell-switch components coupled to negative terminals of the cell-units and second side-winding, respectively; and a microcontroller for controlling main switch component and cell-switch unit, and determining voltage levels fed back from cell voltage-sensing unit.

United States patent application publication no. US 2012/313441 A1 discloses a battery cell balancing system including N switching circuits connected to first terminals and second terminals of N battery cells, respectively, where N is an integer greater than one. A first transformer includes a first core and N sets of windings wound around the first core. The N sets of windings are connected to the N switching circuits, respectively. A first control module controls switching of the N switching circuits to reverse first connections between the first terminals and the second terminals of the N battery cells and the N sets of windings, respectively, at a first frequency to balance charge levels of the N battery cells.

### Summary of the Invention

According to an aspect of the present invention, there is provided a system for balancing charge over a plurality of rechargeable energy storage devices coupled in series, the system comprising: a plurality of balancing units each assigned to one of the rechargeable energy storage devices; an AC signal generator for providing an AC signal to the plurality of balancing units for balancing the charge on their assigned rechargeable energy storage devices; and a capacitive coupling between the AC signal generator and each of the plurality of balancing units for common mode blocking, wherein the balancing units comprise a plurality of switching circuits for transferring charge from the AC signal generator to respective ones of said energy storage devices; wherein each of said plurality of switching circuits comprises: a first transistor, a first a diode, and a second diode, arranged to transfer, when said first transistor is in a conducting state, charge from the AC signal generator to a respective one of said energy storage devices; and
a second transistor and a first resistor arranged to discharge, when said second transistor is in a conducting state, charge from said respective one of said energy storage devices over said first resistor.

The term "transistor", as used herein, is not limited to any particular technology. Hence, unless otherwise indicated, the term covers *inter alia* bipolar junction transistors (BJT), insulated gate bipolar transistors (IGBT), and field effect transistors (FET) such as MOSFETs.

It is an advantage of the present invention that the circuit for each energy storage device can easily be switched between a charging and a discharging state by controlling the state of a limited number of switches (first and second transistor), in a way that can be achieved by very simple off-the-shelf logic, such as a standard battery management system (BMS) chip (e.g. the LTC^{®}6811 multicell battery monitor, available from Analog Devices of Wilmington, Massachusetts).

In an embodiment of the system according to the present invention, said second transistor is an n-channel MOSFET; said first transistor and said first diode are connected in series between said capacitive coupling and a positive terminal of said respective one of said energy storage devices; said second diode is connected between a negative terminal of said respective one of said energy storage devices and said capacitive coupling; and said second transistor and said first resistor are connected in series between said positive terminal and said negative terminal of said respective one of said energy storage devices.

It is advantage of this embodiment that the balancing circuitry can easily be integrated, as all the required switches are implemented as MOSFETs. The circuit for each energy storage device can easily be switched between a charging and a discharging state by controlling the state of the two MOSFETs. This can be achieved by very simple logic, such as a standard battery management system (BMS) chip or an appropriately programmed microprocessor.

In a specific embodiment, said first transistor is an n-channel MOSFET.

It is an advantage of this embodiment that it provides minimal power loss in the circuit branch switched by the first transistor.

In another specific embodiment, said first transistor is a p-channel MOSFET.

It is an advantage of this embodiment that the switching behavior of the first transistor can more easily be controlled, for instance by connecting its gate to a conventional BMS slave circuit, which would only involve a small number of basic components to convert the BMS signal to the gate-source voltage required to control the MOSFET, instead of a dedicated driver.

In another embodiment of the system according to the present invention, said first transistor is an n-channel MOSFET; said switching circuit further comprises a third transistor, said third transistor being a bipolar NPN-transistor; said first diode is connected in series between said capacitive coupling and a positive terminal of said respective one of said energy storage devices; said first transistor and said second diode are connected between a negative terminal of said respective one of said energy storage devices and said capacitive coupling; a second resistor is connected between said positive terminal of said respective one of said energy storage devices and a gate of said first transistor; and said third transistor is connected: with its collector to said gate of said first transistor, with its emitter to a source of said first transistor, and with its base, over a third resistor and a switch, to a drain of said first transistor.

It is advantage of this embodiment that the circuit for each energy storage device can easily be switched to a charging state by controlling the state of a single switch. Preferably, said switch is comprised in an integrated battery management system (BMS) component.

According to an aspect of the present invention, there is provided a method of balancing the charge of a rechargeable storage device having two terminals and a balancing unit comprising a switching circuit for transferring charge from an AC signal generator to said energy storage devices; wherein said switching circuit comprises: a first transistor, a first a diode, and a second diode, arranged to transfer, when said first transistor is in a conducting state, charge from the AC signal generator to a respective one of said energy storage devices; and a second transistor and a first resistor arranged to discharge, when said second transistor is in a conducting state, charge from said respective one of said energy storage devices over said first resistor; the method comprising: measuring an instantaneous electrical parameter across the terminals of the energy storage device; comparing the measured electrical parameter to a predetermined parameter value; and depending on the comparison result, transferring charge to or away from the energy storage device by actuating said first transistor and/or said second transistor; wherein transferring charge comprises providing an AC signal to a balancing unit coupled to the rechargeable energy storage device, the balancing unit applying the AC signal to the rechargeable energy storage device or not depending on the signal of the AC signal and the comparison result, transferring charge including common mode blocking by capacitive coupling.

In an embodiment of the method according to the present invention, said second transistor is an n-channel MOSFET; said first transistor and said first diode are connected in series between said capacitive coupling and a positive terminal of said respective one of said energy storage devices; said second diode is connected between a negative terminal of said respective one of said energy storage devices and said capacitive coupling; and said second transistor and said first resistor are connected in series between said positive terminal and said negative terminal of said respective one of said energy storage devices.

In a specific embodiment, said first transistor is an n-channel MOSFET.

In another specific embodiment, said first transistor is a p-channel MOSFET.

In an embodiment of the method according to the present invention, said first transistor is an n-channel MOSFET; said switching circuit further comprises a third transistor, said third transistor being a bipolar NPN-transistor; said first diode is connected in series between said capacitive coupling and a positive terminal of said respective one of said energy storage devices; said first transistor and said second diode are connected between a negative terminal of said respective one of said energy storage devices and said capacitive coupling; a second resistor (R2) is connected between said positive terminal of said respective one of said energy storage devices and a gate of said first transistor; and said third transistor is connected: with its collector to said gate of said first transistor, with its emitter to a source of said first transistor, and with its base, over a third resistor and a switch, to a drain of said first transistor.

In a specific embodiment, said switch is comprised in an integrated battery management system (BMS) component.

The technical features and advantages of embodiments of the method according to the present invention correspond, *mutatis mutandis,* to those of the corresponding embodiments of the system according to the present invention.

### Brief Description of the Figures

These and other technical features and advantages of embodiments of the present invention will now be described with reference to the accompanying drawings, in which:
- Figure 1 schematically illustrates a rechargeable energy storage system provided with a balancing system according to an embodiment of the present invention;
- Figure 2 schematically illustrates the balancing system of Figure 1 in more detail;
- Figure 3 presents a schematic of a first embodiment of the system according to the invention; and
- Figure 4 presents a schematic of a second embodiment of system according to the invention.

### Detailed Description of Embodiments

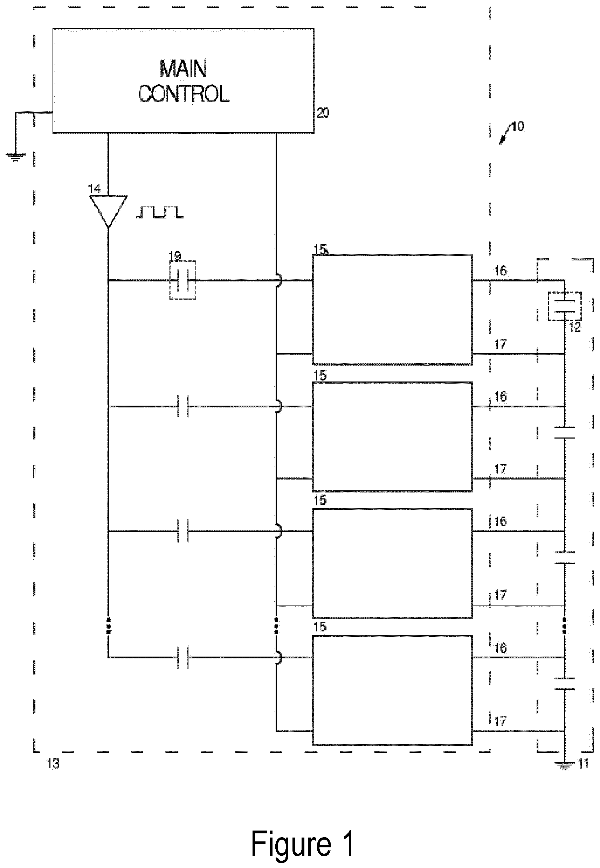

**Figure 1** illustrates a rechargeable energy storage system **10** including a system **13** for balancing charge over the plurality of rechargeable energy storage devices **12,** according to an embodiment of the present invention. The illustrated system **10** is similar to the one presented in Figure 1 of European patent application no. EP 2 302 757 A1 in the name of the present applicant, but differs in the configuration and the operation of the balancing units **15,** as will be made clear hereinbelow.

The illustrated system **13** comprises a series string **11** of a plurality of energy storage devices **12,** also called cells. The energy storage devices **12** are rechargeable. Each one energy storage device **12** can comprise a single energy storage cell or a parallel connection of multiple energy storage cells (not illustrated). The series-connected rechargeable energy storage devices **12** together form a battery, a pack or a stack. The rechargeable energy storage devices **12** may be any type of rechargeable energy storage device. The energy storage devices **12** may in particular be ultracapacitors, also known as supercapacitors or electric or electrochemical double-layer capacitors (EDLCs). These are electrochemical capacitors that have an unusually high energy density when compared to common capacitors; typically on the order of thousands of times greater than a high-capacity electrolytic capacitor. Typical capacitance values may range from a few farads to a few thousands of farads. Alternatively, the rechargeable energy storage devices **12** may be batteries, for example high energy density batteries, such as for example Lithium or Lithium Ion (Li-ion) batteries. Other kinds of rechargeable energy storage devices can equally be used. Preferred applications are in the fields of energy smoothing and momentary load devices, which require very high instant powers compared to the average power ratings.

Each rechargeable energy storage device **12** has a limited operating voltage, e.g. between 2 and 4 V. In order to obtain a useful operating voltage of, for example, a few tens to a few hundreds of Volts or even more, useful e.g. as an energy source in vehicle applications, a plurality, and sometimes a large number of rechargeable energy storage devices **12** need to be coupled in series. Slight differences between the energy storage devices **12** in a string or series-coupling can produce imbalances in the cell voltages, which may greatly reduce the charge capacity.

In order to alleviate this, a rechargeable energy storage system **10** also comprises a system **13** for balancing charge over the plurality of rechargeable energy storage devices **12.**

The system **13** for balancing charge comprises an AC signal generator **14** for charging one or more of the plurality of rechargeable energy storage devices **12.** The system **13** furthermore comprises a plurality of balancing units **15.** Each balancing unit **15** is assigned to one of the rechargeable energy storage devices **12.** For optimal performance, each rechargeable energy storage device **12** is assigned a balancing unit **15.**

Each energy storage device **12** in the string **11** is provided with a first terminal **16,** which is its positive terminal, and a second terminal **17** which is its negative terminal. The energy storage devices **12** are coupled in the string **11** such that a positive terminal **16** of a first energy storage device **12** is coupled to a negative terminal **17** of a second energy storage device, and so on. The negative terminal **17** of the very first energy storage device **12** in the string, and the positive terminal **16** of the very last energy storage device **12** in the string are accessible from outside.

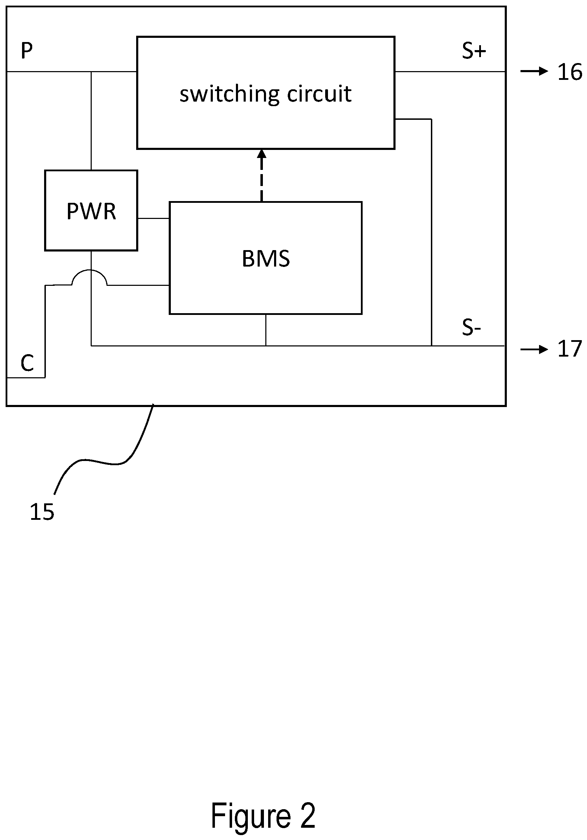

As shown in **Figure 2****,** a balancing unit **15** has a first input port S+ and a second input port S-. The first and second terminals **16, 17** of an energy storage device **12** are connected to the first and second input ports S+, S- of the balancing unit **15** assigned to that energy storage device **12,** so that the positive terminal **16** of the energy storage device **12** is connected to the first input port S+ and the negative terminal **17** of the energy storage device **12** is connected to the second input port S-. The balancing unit **15** is adapted for measuring an instantaneous electrical parameter of the associated energy storage device **12,** e.g. the voltage across the two input ports S+ and S-. In order to obtain this, the balancing unit **15** is provided with suitable measurement circuitry. Preferably, this measurement circuitry is an analog input of a battery management system (BMS) component **18** present in the balancing unit **15.**

The balancing unit **15** according to embodiments of the present invention furthermore comprises an input terminal P for receiving an input signal. This input terminal is electrically connected, over a switching circuit, to the first or second input ports S+ and S-, respectively. The input signal is received from the AC signal generator **14.** The balancing unit **15** is adapted for controlling the switching circuit in function of the voltage level at input terminal P. This control of the switching circuit is controlled by the battery management system (BMS) component **18.** The battery management system (BMS) component **18** may draw power from the input terminal P by rectifying the AC signal, e.g. a block wave.

According to the invention, the switching circuit comprises a first transistor, a first a diode, and a second diode, arranged to transfer, when said first transistor is in a conducting state, charge from the AC signal generator **14** to a the energy storage device **12.** The first transistor is preferably a MOSFET connected in said circuit with its source and its drain. The switching circuit further comprises a second transistor and a first resistor R1 arranged to discharge, when said second transistor is in a conducting state, charge from said energy storage device **12** over said first resistor.

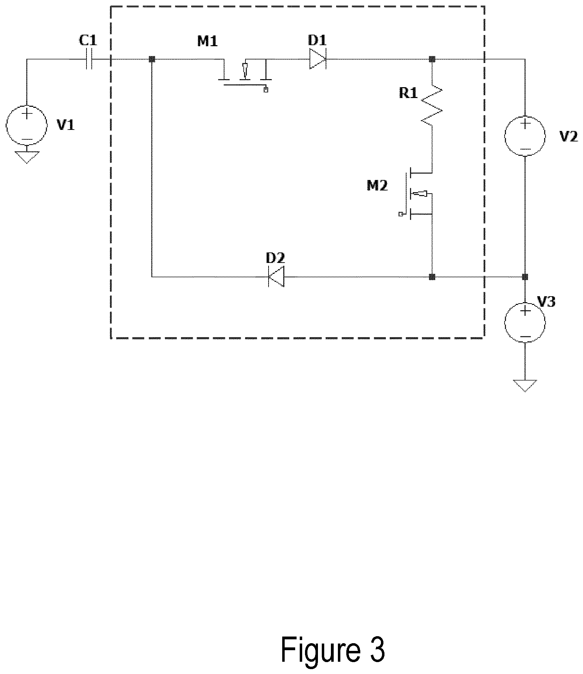

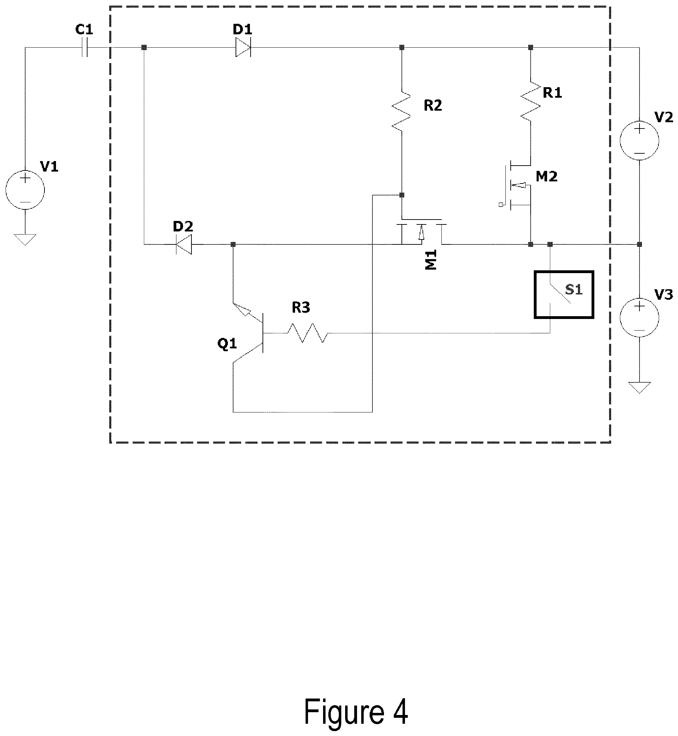

Embodiments of the switching circuit will now be described with reference to Figures 3 and 4, where the switching circuit corresponds to the portion of the schematic enclosed in a rectangle drawn in dashed lines. For the sake of internal consistency of Figures 3 and 4 (which have the traditional form of electronic schematics) and without loss of generality, the AC signal generator **14** has been represented as voltage source **V1,** the energy storage device **12** of interest has been represented as voltage source **V2,** the collective effect of the remaining energy storage devices **12** has been represented as voltage source **V3,** and the capacitive coupling **19** has been represented as capacitor **C1.**

A first embodiment of the switching circuit will now be described with reference to Figure 3.

As stated above, the first transistor **M1,** the first a diode **D1,** and the second diode **D2** are arranged to transfer, when said first transistor **M1** is brought into a conducting state between its source and its drain by applying an appropriate gate-source voltage, charge from the AC signal generator **14** to the energy storage device **12.** To that end, the first transistor **M1** is a MOSFET connected in said circuit with its source connected to the first diode **D1** and its drain connected to the capacitive coupling **19** of the AC signal generator **14.** The first transistor **M1** is illustrated as an n-channel MOSFET; this choice ensures minimal power loss in the circuit branch switched by the first transistor **M1.** It is, however, also possible to use a p-channel MOSFET as the first transistor **M1,** in which case it may easily be switched on and off by an output of the battery management system (BMS) component **18** suitably connected to its gate by means of basic components to convert the BMS signal to the gate-source voltage required to control the MOSFET (not illustrated).

Furthermore, the second transistor **M2** and the first resistor **R1** are arranged to discharge, when said second transistor **M2** is in a conducting state between its source and its drain by applying an appropriate gate-source voltage, charge from the energy storage devices **12** over said first resistor **R1.** In the illustrated case, the second transistor **M2** is an n-channel MOSFET.

In this first embodiment, the first transistor **M1** and the first diode **D1** are connected in series between the capacitive coupling **19** and the positive terminal **16** of the energy storage device **12.** The second diode **D2** is connected between the negative terminal **17** of the energy storage device **12** and the capacitive coupling **19.** The second transistor **M2** and the first resistor **R1** are connected in series between the positive terminal **16** and the negative terminal **17** of the energy storage device **12.**

A second embodiment of the switching circuit will now be described with reference to Figure 4.

As stated above, the first transistor **M1,** the first diode **D1,** and the second diode **D2** are arranged to transfer, when said first transistor **M1** is brought into a conducting state between its source and its drain by applying an appropriate gate-source voltage, charge from the AC signal generator **14** to the energy storage device **12.**

In this second embodiment, the first diode **D1** is connected in series between said capacitive coupling **19** and the positive terminal **16** of the energy storage device **12.** The first transistor **M1** and the second diode **D2** are connected between the negative terminal **17** of the energy storage device **12** and the capacitive coupling **19.** The second transistor **M2** and the first resistor **R1** are connected in series between the positive terminal **16** and the negative terminal **17** of the energy storage device **12.**

A second resistor **R2** is connected between the positive terminal **16** of the energy storage device **12** and the gate of the first transistor **M1.**

A third transistor **Q1** is a bipolar NPN-transistor connected as follows:
- with its collector to the gate of the first transistor **M1,**
- with its emitter to the source of the first transistor **M1,** and
- with its base, over a third resistor **R3** and a switch **S1,** to a drain of said first transistor **M1.**

When switch **S1** is open, the gate-source tension existing over the first transistor **M1,** will cause the first transistor **M1** to be in a conducting state, such that charge can be transferred from the AC signal generator **14** to the energy storage device **12.** There will be conduction over the first diode **D1** when the instantaneous voltage of the AC signal presented via the capacitive coupling **C1** exceeds the voltage of the energy storage device **12.** Conversely, there will be conduction over the second diode **D2** when the instantaneous voltage of the AC signal presented via the capacitive coupling **C1** is less than the voltage of the energy storage device **12.**

When switch **S1** is closed, the third transistor **Q1** will substantially short-circuit the source and gate of the first transistor **M1,** such that the first transistor **M1** returns to a nonconductive state, whereby no charging of the energy storage device **12** will take place.

The switch **S1** is preferably comprised in an integrated battery management system (BMS) component.

As before, the second transistor **M2** and the first resistor **R1** are arranged to discharge, when said second transistor **M2** is in a conducting state between its source and its drain by applying an appropriate gate-source voltage, charge from the energy storage devices **12** over said first resistor **R1.** In the illustrated case, the second transistor **M2** is an n-channel MOSFET.

A balancing unit **15** according to embodiments of the present invention performs at least the following functions:
- measuring an instantaneous electrical parameter, e.g. the voltage across the input ports S+, S-of the associated energy storage device **12,** and
- actuating the switching circuit in function of the measured parameters.

According to embodiments of the present invention, all balancing units **15** of the system **13** for balancing are coupled to the AC signal generator **14.** This AC signal generator **14** can be a block wave generator, a sinusoidal signal source, a saw tooth generator, or any other type of AC signal generator. It is advantageous if the AC signal generator **14** is a high frequency signal generator, as this reduces component size. A sinusoidal signal generator is more efficient, has low peak currents hence low heat generation, and does not substantially present any switching losses. However, a block wave generator is easier to implement than a sinusoidal signal generator. The AC signal generator **14** can be powered from an external source (not illustrated), e.g. a charger, or from the series string **11** of energy storage devices **12.** The AC signal generator **14** can be controlled by the main controller **20.** It is advantageous to have a single AC signal generator **14** for the balancing system **13.**

According to embodiments of the present invention, a plurality of AC signal generators are provided (not illustrated), and the plurality of balancing units are grouped into groups, the balancing units of one group being coupled to one of the AC signal generators. Also in this case it can be said that the system for balancing comprises a single AC signal generator, the signal generator and the group of balancing units coupled thereto forming the system for balancing. No signal generator is required in the balancing units.

According to embodiments of the present invention, the balancing units **15** are coupled to the AC signal generator by means of a capacitor **19.** The capacitive coupling provided by the capacitors **19** is used to block common mode voltages. This is required because the energy storage devices **12** are at different and varying potential levels.

The balancing units **15,** or thus the system **13** for balancing, functions as follows. Each balancing circuit **15** in first instance measures a local instantaneous electrical parameter of the associated energy storage device **12,** e.g. the local voltage across its first and second terminals **16, 17,** i.e. the voltage across the associated energy storage device **12.** This measuring can be performed via a method and device as disclosed in WO 2006/058394. In accordance with embodiments of the present invention, the measurement can be performed by means of an AD converter, for example an AD converter **21** which forms part of battery management system (BMS) component **18,** local to the balancing unit **15.**

In accordance with embodiments of the present invention, a measuring circuit may digitize the measured values, e.g. voltages, and transmit them to the battery management system (BMS) component **18.** The measured parameter value, e.g. voltage, determines whether the cell **12** is operating in a region where charging or discharging is required.

When the comparison identifies that a cell **12** needs to be charged, the battery management system (BMS component) **18** actuates the switching circuit of that cell **12** as follows:
- if the switching circuit is configured according to the first embodiment:
   o the first transistor **M1** is brought into a conducting state between its source and its drain by applying an appropriate gate-source voltage;
   o the second transistor **M2** is kept in a non-conducting state between its source and its drain;
- if the switching circuit is configured according to the second embodiment:
   o the first transistor **M1** is brought into a conducting state between its source and its drain by applying an appropriate gate-source voltage by opening the switch **S1;**
   o the second transistor **M2** is kept in a non-conducting state between its drain and its source.

When the comparison identifies that a cell **12** needs to be discharged, the battery management system (BMS component) **18** actuates the switching circuit of that cell **12** as follows:
- if the switching circuit is configured according to the first embodiment:
   o the first transistor **M1** is kept in a non-conducting state between its source and its drain;
   o the second transistor **M2** is brought into a conducting state between its source and its drain by applying an appropriate gate-source voltage;
- if the switching circuit is configured according to the second embodiment:
   o the first transistor **M1** is kept in a non-conducting state between its source and its drain by closing the switch **S1;**
   o the second transistor **M2** is brought into a conducting state between its source and its drain by applying an appropriate gate-source voltage.

When a cell **12** does not need any charge nor discharge, the battery management system (BMS component) **18** actuates the switching circuit of that cell **12** as follows:
- if the switching circuit is configured according to the first embodiment:
   o the first transistor **M1** is kept in a non-conducting state between its source and its drain;
   o the second transistor **M2** is kept in a non-conducting state between its source and its drain;
- if the switching circuit is configured according to the second embodiment:
   o the first transistor **M1** is kept in a non-conducting state between its source and its drain by closing the witch **S1;**
   o the second transistor **M2** is kept in a non-conducting state between its source and its drain.

Controlling the switching circuit in this way in one balancing unit **15** allows to transfer charge from the AC signal generator to the associated energy storage device **12,** or to drain charge from an energy storage device **12** over its associated resistor **R1.** Hence the voltage of individual cells with a low voltage can be increased, and the voltage of individual cells with a high voltage can be decreased. This provides a gain of balancing speed and efficiency relative to traditional systems that only rely on discharging of the storage devices.

Due to the capacitive coupling **19** of the individual balancing units **15,** charge transfer can take place between any energy storage device **12** and the AC signal generator **14,** regardless of individual energy storage devices' **15** potential with respect to each other.

According to embodiments of the present invention, decisions on charging or discharging of energy storage devices or on energy storage devices remaining unaffected, may be taken locally in the balancing units **15,** for example by the local battery management system (BMS) components **18.**

Strategies for balancing a system of energy storage devices **12** are disclosed in the aforementioned European patent application publication no. EP 2 302 757 A1, in the name of the present applicant. Such strategies can be implemented in the system disclosed herein.

The balancing method and device according to embodiments of the present invention allows to obtain overvoltage and undervoltage protection. It is advantageous that a balancing system **15** in accordance with embodiments of the present invention provides such overvoltage and undervoltage protection, without supplementary hardware features being required. A concrete example of a scheme to prevent overvoltage and undervoltage is presented in the aforementioned European patent application publication no. EP 2 302 757 A1, in the name of the present applicant, and applies in the same way to the present invention.

Although the invention has been described hereinabove with reference to specific embodiments, this was done to clarify and not to limit the invention, the scope of which is determined by the accompanying claims.

## Claims

1. A system (13) for balancing charge over a plurality of rechargeable energy storage devices (12) coupled in series, the system (13) comprising:
- a plurality of balancing units (15) each assigned to one of the rechargeable energy storage devices (12);
- an AC signal generator (14) for providing an AC signal to the plurality of balancing units (15) for balancing the charge on their assigned rechargeable energy storage devices (12); and
- a capacitive coupling (19) between the AC signal generator (14) and each of the plurality of balancing units (15) for common mode blocking;
wherein the balancing units (15) comprise a plurality of switching circuits for transferring charge from the AC signal generator (14) to respective ones of said energy storage devices (12);
**characterized in that** each of said plurality of switching circuits comprises:
- a first transistor (M1), a first a diode (D1), and a second diode (D2), arranged to transfer, when said first transistor (M1) is in a conducting state, charge from the AC signal generator (14) to a respective one of said energy storage devices (12); and
- a second transistor (M2) and a first resistor (R1) arranged to discharge, when said second transistor (M2) is in a conducting state, charge from said respective one of said energy storage devices (12) over said first resistor (R1).

2. The system (13) according to claim 1,
wherein said second transistor (M2) is an n-channel MOSFET;
wherein said first transistor (M1) and said first diode (D1) are connected in series between said capacitive coupling (19) and a positive terminal (16) of said respective one of said energy storage devices (12);
wherein said second diode (D2) is connected between a negative terminal (17) of said respective one of said energy storage devices (12) and said capacitive coupling (19); and
wherein said second transistor (M2) and said first resistor (R1) are connected in series between said positive terminal (16) and said negative terminal (17) of said respective one of said energy storage devices (12).

3. The system (13) according to claim 2, wherein said first transistor (M1) is an n-channel MOSFET.

4. The system (13) according to claim 2, wherein said first transistor (M1) is a p-channel MOSFET.

5. The system (13) according to claim 1,
wherein said first transistor (M1) is an n-channel MOSFET; wherein said switching circuit further comprises a third transistor (Q1), said third transistor being a bipolar NPN-transistor;
wherein said first diode (D1) is connected in series between said capacitive coupling (19) and a positive terminal (16) of said respective one of said energy storage devices (12);
wherein said first transistor (M1) and said second diode (D2) are connected between a negative terminal (17) of said respective one of said energy storage devices (12) and said capacitive coupling (19);
wherein a second resistor (R2) is connected between said positive terminal (16) of said respective one of said energy storage devices (12) and a gate of said first transistor (M1); and
wherein said third transistor (Q1) is connected:
- with its collector to said gate of said first transistor (M1),
- with its emitter to a source of said first transistor (M1), and
- with its base, over a third resistor (R3) and a switch (S1), to a drain of said first transistor (M1).

6. The system (13) according to claim 5, wherein said switch (S1) is comprised in an integrated battery management system (BMS) component.

7. A method of balancing the charge of a rechargeable storage device (12) having two terminals (16, 17) and a balancing unit (15) comprising a switching circuit for transferring charge from an AC signal generator (14) to said energy storage devices (12);
wherein said switching circuit comprises:
- a first transistor (M1), a first a diode (D1), and a second diode (D2), arranged to transfer, when said first transistor (M1) is in a conducting state, charge from the AC signal generator (14) to a respective one of said energy storage devices (12); and
- a second transistor (M2) and a first resistor (R1) arranged to discharge, when said second transistor (M2) is in a conducting state, charge from said respective one of said energy storage devices (12) over said first resistor (R1);
the method comprising:
- measuring an instantaneous electrical parameter across the terminals (16, 17) of the energy storage device (12);
- comparing the measured electrical parameter to a predetermined parameter value; and
- depending on the comparison result, transferring charge to or away from the energy storage device (12) by actuating said first transistor (M1) and/or said second transistor (M2);
wherein transferring charge comprises providing an AC signal to a balancing unit coupled to the rechargeable energy storage device, the balancing unit applying the AC signal to the rechargeable energy storage device or not depending on the signal of the AC signal and the comparison result, transferring charge including common mode blocking by capacitive coupling.

8. The method according to claim 7,
wherein said second transistor (M2) is an n-channel MOSFET;
wherein said first transistor (M1) and said first diode (D1) are connected in series between said capacitive coupling (19) and a positive terminal (16) of said respective one of said energy storage devices (12);
wherein said second diode (D2) is connected between a negative terminal (17) of said respective one of said energy storage devices (12) and said capacitive coupling (19); and
wherein said second transistor (M2) and said first resistor (R1) are connected in series between said positive terminal (16) and said negative terminal (17) of said respective one of said energy storage devices (12).

9. The method according to claim 8, wherein said first transistor (M1) is an n-channel MOSFET.

10. The method according to claim 8, wherein said first transistor (M1) is a p-channel MOSFET.

11. The method according to claim 7,
wherein said first transistor (M1) is an n-channel MOSFET;
wherein said switching circuit further comprises a third transistor (Q1), said third transistor (Q1) being a bipolar NPN-transistor;
wherein said first diode (D1) is connected in series between said capacitive coupling (19) and a positive terminal (16) of said respective one of said energy storage devices (12);
wherein said first transistor (M1) and said second diode (D2) are connected between a negative terminal (17) of said respective one of said energy storage devices (12) and said capacitive coupling (19) ;
wherein a second resistor (R2) is connected between said positive terminal (16) of said respective one of said energy storage devices (12) and a gate of said first transistor (M1); and
wherein said third transistor (Q1) is connected:
- with its collector to said gate of said first transistor (M1),
- with its emitter to a source of said first transistor (M1), and
- with its base, over a third resistor (R3) and a switch (S1), to a drain of said first transistor (M1).

12. The method according to claim 11, wherein said switch (S1) is comprised in an integrated battery management system (BMS) component.
